# EUROPÄISCHE PATENTSCHRIFT

(11) **EP 1 911 339 B1**
(45) Veröffentlichungstag und Bekanntmachung des Hinweises auf die Patenterteilung: **04.06.2014**
(21) Anmeldenummer: 07020004.3
(22) Anmeldetag: 12.10.2007
(51) Int. Cl.: A01C 7/20, A01C 5/06

(54) **Doppelscheibenschar mit Tiefenführungsrolle und Energiespeicher**
Double disc plough with depth guide roller and energy storage
Char à double disque doté d'un rouleau de guidage en profondeur et accumulateur d'énergie

(30) Priorität: 14.10.2006 DE 102006048672
(43) Veröffentlichungstag der Anmeldung: 16.04.2008
(73) Patentinhaber: Lemken GmbH & Co. KG, 46519 Alpen (DE)
(72) Erfinder: Werries, Dieter, 46519 Alpen (DE); Gebbeken, Martin, 46519 Alpen (DE); Meurs, Wilhelm, 46519 Alpen (DE)
(74) Vertreter: Schulte, Jens Michael

(56) Entgegenhaltungen:
- EP-A- 0 140 190
- EP-A- 1 060 649
- DE-A1- 19 804 293
- US-A- 5 724 902
- US-B1- 6 216 616

## Beschreibung

Die Erfindung betrifft ein Doppelscheibenschar mit Tiefenführungsrolle für Drillmaschinen gemäß dem Oberbegriff des Patentanspruches 1.

Ein derartiges Doppelscheibenschar ist dem europäischen Patent 1 060 649 B1 zu entnehmen. Bei dessen Gegenstand handelt es sich um ein Doppelscheibenschar mit Tiefenführungsrolle, das in unebenen Bodenverhältnissen große Abweichungen der Sätiefe aufweist, da bei einer Absenkung oder Anhebung der Führungsebene der Tiefenführungsrolle sich die Sätiefe um nur den halben Betrag verringert oder vergrößert. Von einer gleich bleibenden Tiefenführung kann hier nicht gesprochen werden. Zusätzlich hat diese Version den Nachteil, dass bei Auftreffen des Doppelscheibenschares auf ein Bodenhindernis große Kräfte im Bereich der einzelnen Bauteile auftreten, da insbesondere die Tiefenführungsrolle beim Ausweichen des Doppelscheibenschares nach oben um den doppelten Betrag ausweichen muss und dadurch extrem hohe Beschleunigungskräfte auftreten können.

Auch die kanadische Anmeldung CA 2023239 zeigt ein Doppelscheibenschar mit Tiefenführungsrolle für Drillmaschinen. Bei dieser Ausführungsform treten zwar aufgrund der gefederten Verbindung der Tiefenführungsrolle mit dem Doppelscheibenschar keine hohe Bauteilbelastungen auf, wenn das Doppelscheibenschar auf ein Bodenhindernis stößt, jedoch ist ähnlich wie bei dem europäischen Patent 1 060 649 B1 keine genaue Tiefenführung der Doppelscheibenschare in unebenem Gelände möglich, auch aufgrund der gefederten Befestigung der Tiefenführungsrolle mit dem Doppelscheibenschar. Je nach Bodenwiderstand und vorgegebenem Schardruck arbeitet das Doppelscheibenschar tiefer oder flacher, da die Tiefenführungsrolle aufgrund der gefederten Verbindung mit dem Doppelscheibenschar mehr oder weniger weit nachgibt.

Aus der DE-OS 103 52 209 ist eine Drillmaschine bekannt, mit der zwei Schwenkarme über einen begrenzten Schwenkwinkelbereich ohne Zwangssteuerung relativ zueinander schwenkbar über diesen Winkelbereich hinaus zwangsgesteuert miteinander verbunden sind. Weiterhin soll der Lenker für das zweite Säschar derart ausgebildet sein, dass zweite und dritte Schwenkarme über einen begrenzten Schwenkwinkelbereich ohne Zwangssteuerung relativ zueinander schwenkbar und über diesen Winkelbereich hinaus zwangsgesteuert miteinander verbunden sind. Das dort gezeigte Gerät nimmt allerdings einen sehr großen Bauraum in Anspruch, da beim Ausschwenken der Bauteile nach hinten, hinter diesen Bauteilen dafür ausreichend Freiraum vorgesehen werden muss. Der hierfür benötigte Freiraum geht zu Lasten einer wünschenswerten Kompaktheit des Gerätes.

Aufgabe der Erfindung ist es, ein Doppelscheibenschar mit Tiefenführungsrolle für Drillmaschinen zu schaffen, das kompakt ausgebildet ist und bei dem zum einen eine präzise Tiefenführung des Doppelscheibenschares auch in unebenem Gelände gewährleistet wird und bei dem zum anderen auch sichergestellt ist, dass bei Auftreffen des Doppelscheibenschares auf ein Bodenhindernis nicht auch noch die Tiefenführungsrolle ausgehoben bzw. hoch beschleunigt werden muss.

Diese Aufgabe wird erfindungsgemäß durch die Merkmale des kennzeichnenden Teils des Patentanspruches 1 gelöst.

Durch das Vorsehen eines separaten Schwenkarmes für die Tiefenführungsrolle wird das Doppelscheibenschar zwar durch die Tiefenführungsrolle in der Tiefe geführt, bei Auftreffen des Doppelscheibenschares auf ein Bodenhindernis weicht aber nur das Doppelscheibenschar aus, nicht aber die Tiefenführungsrolle. Mit der vorliegenden Ausführung des Doppelscheibenschares mit Tiefenführungsrolle wird gewissermaßen eine kinematische Parallelogrammfohrung des Doppelscheibenschares auf besonders geeignete Weise verwirklicht. Die Querachse für die Tiefenführungsrolle ist vor dem Doppelscheibenschar positioniert, was ein Verschwenken insbesondere nach oben ermöglicht. Eine störende Veränderung der Lage der Tiefenführungsrolle während des Schwenkvorganges nach hinten wird dadurch weitestgehend vermieden. Dies ermöglicht insgesamt eine kompakte Bauweise der Drillmaschine, da nachgeordnete Bauteile äußerst dicht hinter den Tiefenführungsrollen angeordnet werden können.

Die Erfindung sieht weiter vor, dass der Verbindungslenker bei Auftreffen des Doppelscheibenschares auf ein Hindernis ein weitestgehend unbehindertes Ausweichen des Doppelscheibenschares zulassend ausgebildet ist. Die Nachgebbarkeit des Verbindungslenkers ist so groß, dass auch bei größeren Hindernissen das Doppelscheibenschar problemlos über die Hindernisse hinwegrollen kann, ohne dass die Tiefenführungsrolle mitgeführt werden muss. Dies verhindert Beschädigungen am Doppelscheibenschar und an benachbarten Bauteilen.

Erfindungsgemäß ist vorgesehen, dass der Verbindungslenker als Kette, Knicklenker oder Seil ausgebildet ist. Durch das Vorsehen eines Verbindungslenkers als Kette, Knicklenker oder Seil wird auf einfachste Weise ein Verbindungslenker bereitgestellt, der große Zugkräfte übertragen kann und gleichzeitig auch eine große Nachgebbarkeit beinhaltet.

Die Erfindung sieht weiter vor, dass der Verbindungslenker Dämpfungselemente für die Absorbierung großer Zugkräfte aufweist. Wenn bei großem Schardruck und großer Arbeitsgeschwindigkeit das Doppelscheibenschar über ein Hindernis rollt und danach wieder zurück schwingt, müssen vom Verbindungslenker größere Zugkräfte übernommen werden, da die Tiefenführungsrolle über den Verbindungslenker das Doppelscheibenschar in der Tiefe führt. Das Vorsehen von Dämpfungselementen sorgt dafür, dass größere Zugkräfte abgefedert werden und so leichtere und dadurch auch kostengünstige Verbindungslenker eingesetzt werden können.

Die Erfindung sieht weiter vor, dass die Schwenkachse des Tragarms vor dem Doppelscheibenschar liegt, und zwar in einem Abstand zum Boden von mehr als dem halben Durchmesser und weniger als dem ganzen Durchmesser des Doppelscheibenschares. Dadurch wird es erst möglich, einen kompakten Scharrahmen mit mehr als einer Reihe von Doppelscheibenscharen vorzusehen. Auch die Doppelscheibenschare weichen wie die Tiefenführungsrollen bei Überfahrt über ein Hindernis überwiegend nach oben und nur geringfügig nach hinten aus. Nachgeordnete Tiefenführungsrollen können daher unmittelbar hinter dem Doppelscheibenschar vorgesehen werden; es ist nicht erforderlich, zusätzlichen Freiraum hinter den Doppelscheibenscharen vorzusehen.

Die Erfindung sieht weiter vor, dass der Verbindungslenker so ausgebildet ist, dass der obere Verbindungspunkt im Abstand A zu der Querachse zwischen der Querachse und der Achse der Tiefenführungsrolle mit dem Schwenkarm der Tiefenführungsrolle und der untere Verbindungspunkt im Abstand B zu der Schwenkachse zwischen der Schwenkachse und der Achse des Doppelscheibenschares mit dem Tragarm angeordnet ist und dass der Abstand A zum Abstand B annähernd in dem Verhältnis steht wie der Abstand C zwischen der Querachse und der Achse der Tiefenführungsrolle zum Abstand D zwischen der Schwenkachse und der Achse des Doppelscheibenschares. Durch diese getriebetechnische Anordnung wird mit einfachen Mitteln gewährleistet, dass die Tiefenführungsrolle das Doppelscheibenschar exakt in der Tiefe führt. Wenn die Tiefenführungsrolle in unebenem Gelände nach oben oder nach unten bewegt wird, wird das Doppelscheibenschar jeweils um den gleichen Betrag in seiner Lage verändert. Damit bleibt die voreingestellte Sätiefe immer gleich.

Es ist weiter vorgesehen, dass die Schwenkachse des Doppelscheibenschares und/oder die Querachse der Tiefenführungsrolle mit einem wartungsfreien Gelenk mit einem Gummilager ausgerüstet ist.

Insbesondere bei Drillmaschinen mit größeren Arbeitsbreiten können weit mehr als 50 Säschare vorgesehen sein. Wenn jedes Säschar in regelmäßigen Intervallen abgeschmiert oder gewartet werden muss, bedeutet dies für den Betreiber einen relativ hohen Zeitaufwand. Ein wartungsfreies Gelenk bietet hier erhebliche Vorteile und auch Kostensenkungen.

Erfindungsgemäß ist weiter vorgesehen, dass sowohl die Schwenkachse des Doppelscheibenschares als auch die Querachse der Tiefenführungsrolle mit wartungsfreien Gelenken mit Gummilagern ausgerüstet sind. Wenn alle Gelenke des Doppelscheibenschares und der Tiefenführungsrolle mit wartungsfreien Gelenken ausgerüstet sind, reduziert sich insgesamt der Wartungsaufwand für eine Drillmaschine noch zusätzlich. Die wartungsfreien Gelenke können entsprechend einfach aufgebaut sein, wenn sie mit Gummilagern oder vergleichbaren Materialien ausgerüstet sind.

Die Erfindung sieht weiter vor, dass das jeweilige Gummilager aus einer Außenhülse mit großem Innendurchmesser und einer Innenhülse mit kleinerem Außendurchmesser als der Innendurchmesser der Außenhülse besteht und dass die beiden Hülsen mittels Gummi oder Kunststoffmaterial torsionselastisch miteinander verbunden sind.

Diese Ausführung der Gummilager ist sehr kompakt und einfach zu montieren. Bei der Montage wird z.B. die Außenhülse fest mit den dafür vorgesehenen Bauteilen des Scharrahmens verspannt, die Innenhülse wird mit dem Tragrahmen oder mit dem Schwenkarm fest verschraubt. Dadurch wird ein vertikales Verschwenken des Doppelscheibenschares und der Tiefenführungsrolle nur noch über das torsionselastische Gummi- oder Kunststoffmaterial ermöglicht. Ein Verschleiß der Bauteile ist im gesamten Gelenkbereich ausgeschlossen. Dabei ist es vorteilhaft, wenn dies möglichst rückstellkraftfrei oder rückstellkraftarm geschieht, damit der über den Energiespeicher erzeugte Schardruck auch während der vertikalen Schwenkbewegungen des Doppelscheibenschares und der Tiefenführungsrolle möglichst nicht beeinflusst wird. Bei größeren Rückstellkräften oder negativen Rückstellkräften der Gummilager würden diese Einfluss nehmen auf den voreingestellten Schardruck und auch die Einsinktiefe der Tiefenführungsrolle in den Boden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: eine Seitenansicht der Aufhängung des Doppelscheibenschares und der Tiefenführungsrolle,
- Figur 2: eine Seitenansicht des Doppelscheibenschares mit Tiefenführungsrolle,
- Figur 3: eine andere Seitenansicht des Doppelscheibenschares mit Tiefenführungsrolle und
- Figur 4: eine Seitenansicht des Doppelscheibenschares mit Tiefenführungsrolle und hydraulischem Energiespeicher.

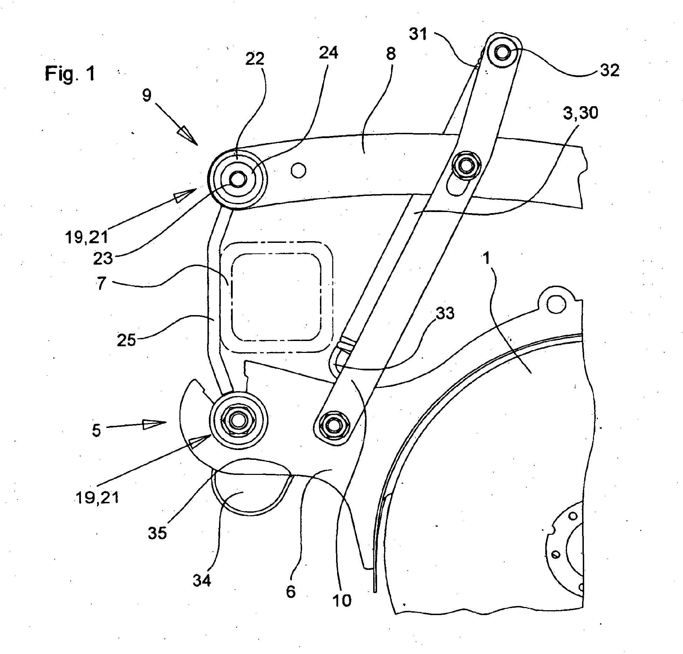

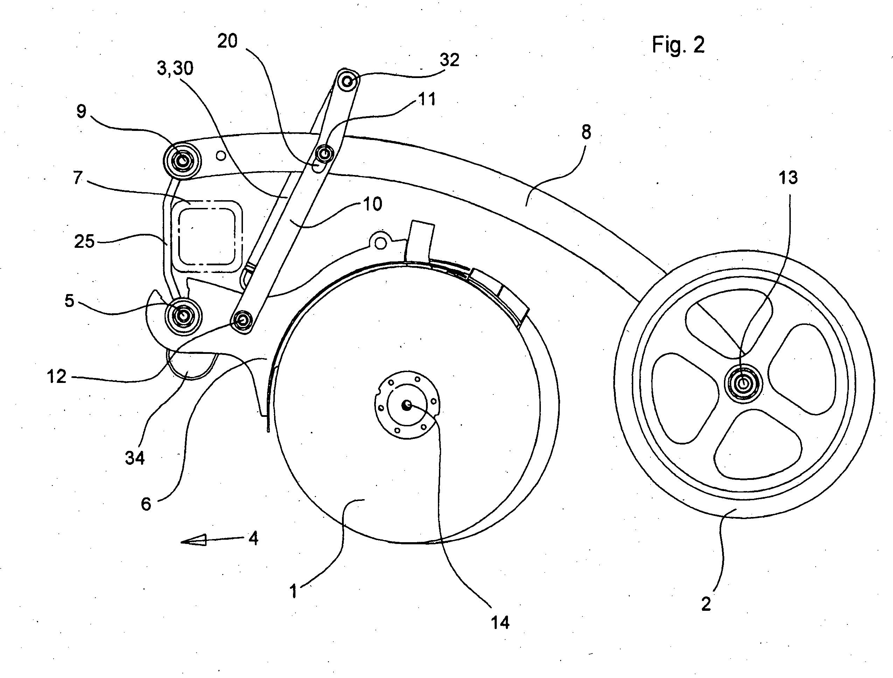

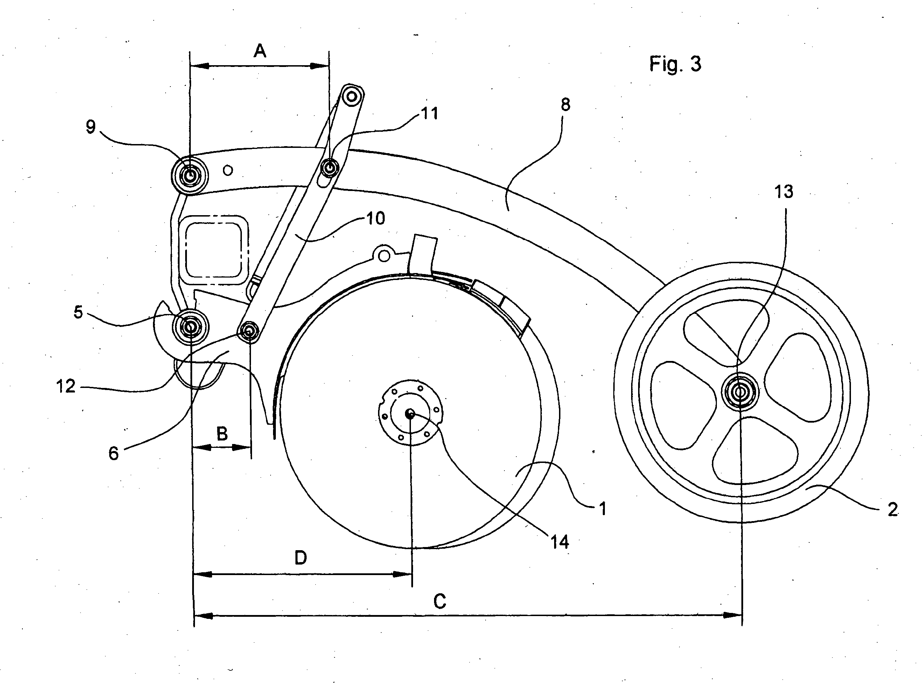

Figur 1 zeigt eine Seitenansicht der Aufhängung des Doppelscheibenschares 1 und der in dieser Figur nicht abgebildeten Tiefenführungsrolle 2. Am Scharrahmen 7 ist der Träger 25 befestigt, der zum einen die Querachse 9 des Schwenkarmes 8 und zum anderen die Schwenkachse 5 des Tragarmes 6 des Doppelscheibenschares 1 aufnimmt. Sowohl die Schwenkachse 5 als auch die Querachse 9 sind als wartungsfreie Gelenke 19 mit Gummilager 21 ausgebildet. Jedes Gummilager besteht aus einer Außenhülse 22, einer Innenhülse 23 und einem dazwischen angeordnetem Gummi- oder Kunststoffmaterial 24, das die Hülsen torsionsweich miteinander verbindet. Der Verbindungslenker 10 ist sowohl mit dem Tragarm 6 als auch mit dem Schwenkarm 8 gelenkig verbunden. Darauf wird näher in der Beschreibung der Figur 2 eingegangen. Über den Energiespeicher 3, in diesem Fall eine Feder 30, wird der Tragarm 6 mit dem Doppelscheibenschar 1 auf den Boden gedrückt. Die Feder 30 ist mit ihrem einen Ende 31 mit der Federaufhängung 32 verbunden. Das andere Ende 33 der Feder 30 ist mit dem Drahtseil 35 verbunden, das mit dem Querrohr 34 verbunden ist. Das Querrohr 34 ist drehbar am Scharrahmen 7 gelagert. Durch Verdrehen des Querrohres 34 wird die Vorspannung der Feder 30 erhöht und auch gleichzeitig der Schardruck des Doppelscheibenschares 1. Um eine parallele Führung des Doppelscheibenschares 1 in Relation zur Tiefenführungsrolle 2 sicherzustellen, steht der Verbindungslenker 10 in besonderer Verbindung mit dem Schwenkarm 8 der Tiefenführungsrolle 2 und dem Tragarm 6 des Doppelscheibenschares 1. Darauf wird in der Beschreibung der Figur 3 näher eingegangen.

Figur 2 zeigt eine komplette Seitenansicht des Doppelscheibenschares 1 mit Tiefenführungsrolle 2. Die Tiefenführungsrolle 2 mit ihrer Achse 13 ist in Arbeitsrichtung 4 gesehen hinter dem Doppelscheibenschar 1 angeordnet und mit dem Schwenkarm 8 verbunden. Das Doppelscheibenschar 1 ist mit seiner Achse 14 mit dem Tragarm 6 verbunden. Sowohl das Doppelscheibenschar 1 als auch die Tiefenführungsrolle 2 sind vertikal schwenkbar über die Schwenkachse 5 und die Querachse 9 mit dem Träger 25 und darüber mit dem Scharrahmen 7 verbunden. Der Verbindungslenker 10 weist oben die Federaufhängung 32 und im Bereich des oberen Verbindungspunktes 11 einen Langloch 20 auf. Der Verbindungslenker 10 ist mit dem unteren Verbindungspunkt 12 mit dem Tragarm 6 des Doppelscheibenschares 1 verbunden. Wenn das Doppelscheibenschar 1 gegen ein Bodenhindernis stößt, weicht es nach oben aus. Dabei wird das Doppelscheibenschar 1 zusammen mit dem Verbindungslenker 10 gegen die Kraft des Energiespeichers 3 bzw. der Feder 30 nach oben bewegt, und zwar so weit wie es das Langloch 20 zulässt. Erst danach würde zusätzlich auch die Tiefenführungsrolle nach oben ausweichen. Denkbar ist auch der Einsatz eines Knicklenkers anstatt des Verbindungslenkers 10, der dann eine größere Knicklenkers anstatt des Verbindungslenkers 10, der dann eine größere Ausweichhöhe des Doppelscheibenschares 1 zulassen würde. Das gleiche gilt für den Einsatz von Ketten oder Seilen als Verbindungslenker 10, die dann ebenfalls eine große Ausweichhöhe des Doppelscheibenschares 1 zulassen würden. Der Energiespeicher 3 müsste dann getriebetechnisch angepasst angeordnet werden.

Figur 3 zeigt eine weitere Seitenansicht des Doppelscheibenschares 1 mit Tiefenführungsrolle 2. Sie verdeutlicht insbesondere die getriebetechnische Anordnung des Verbindungslenkers 10, des Schwenkarms 8 und des Tragarms 6. Um eine genaue Parallelführung des Doppelscheibenschares 1 in Relation zur Tiefenführungsrolle 2 sicherzustellen, wurde der Verbindungslenker 10 mit dem oberen Verbindungspunkt 11 im Abstand A zu der Querachse 9 mit dem Schwenkarm 8 der Tiefenführungsrolle 2 und mit dem unteren Verbindungspunkt 12 im Abstand B zu der Schwenkachse 5 mit dem Tragarm 6 des Doppelscheibenschares 1 verbunden. Der Abstand A zu dem Abstand B steht annähernd im gleichen Verhältnis wie der Abstand C zwischen der Querachse 9 und der Achse 13 der Tiefenführungsrolle 2 zu dem Abstand D zwischen der Schwenkachse 5 und der Achse 14 des Doppelscheibenschares 1.

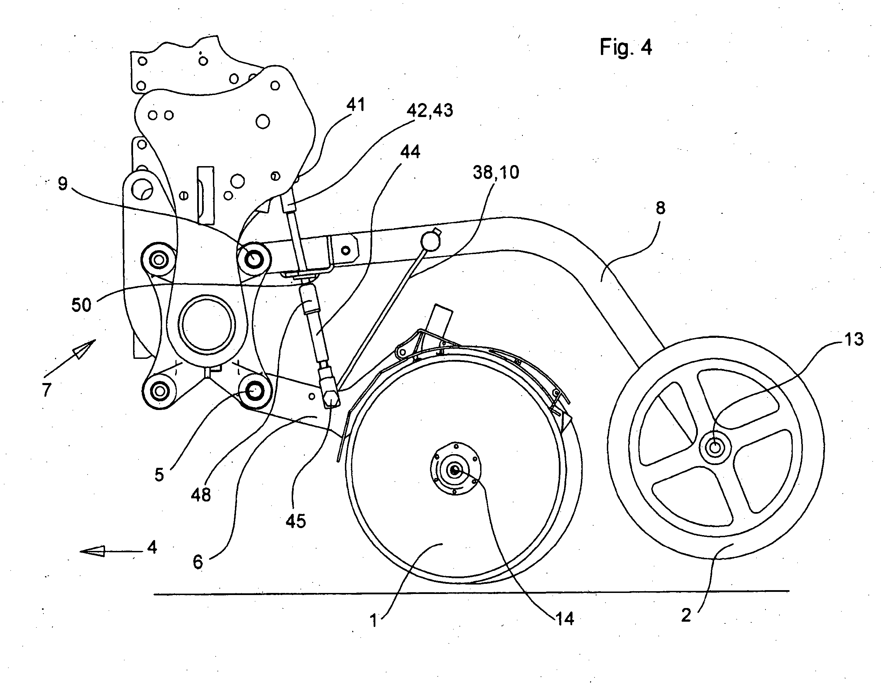

Figur 4 zeigteine Ausführung des Doppelscheibenschares 1 mit Tiefenführungsrolle 2 und hydraulischem Energiespeicher. Der hydraulische Energiespeicher besteht aus einem nicht dargestellten Querrohr, das einen Druckraum aufweist mit mehreren nebeneinander angeordneten Kolbenstangenführungen 41. Der seitliche Abstand der einzelnen Kolbenstangenführungen 41 entspricht dem Reihenabstand der Doppelscheibenschare 1 zueinander. Die Kolbenstangenführungen 41 nehmen jeweils Kolbenstangen 42 auf, die als Plungerkolben 43 ausgebildet sind. Die Plungerkolben 43 stützen sich über Stößel 44 und die Gelenkverbindung 45 direkt auf den Schwenkarm 6 des Doppelscheibenschares 1 ab. Als Verbindungslenker 10 ist hier ein Seil 38 vorgesehen. Der Stößel 44 weist in etwa in der Mitte einen Puffer 48 auf, der als Dämpfungselement dient. Der Schwenkarm 8 weist einen Anschlag 50 auf. Bei entsprechender Auslenkung des Tragarms 6 stößt der Puffer 48 gegen den Anschlag 50 und verhindert so, dass der Plungerkolben 43 zu weit in die Kolbenstangenführung 41 hineingedrückt wird. Die Schwenkachse 9 ist vor dem Doppelscheibenschar 1 angeordnet und gewährleistet so das Ausschwenken von Schwenkarm 8 mit Tiefenführungsrolle 2 nach oben.

## Patentansprüche

1. Doppelscheibenschar (1) mit Tiefenführungsrolle (2) für Drillmaschinen, bei dem der Druck des Doppelscheibenschares (1) auf den Boden durch einen Energiespeicher (3) unterstützt wird, wobei das Doppelscheibenschar (1) um eine quer zur Arbeitsrichtung (4) angeordnete Schwenkachse (5) in vertikaler Richtung schwenkbar mittels Tragarm (6) mit dem Scharrahmen (7) der Drillmaschine verbunden und über die Tiefenführungsrolle (2) in der Arbeitstiefe geführt ist,
**dadurch gekennzeichnet,**
**dass** die Tiefenführungsrolle (2) einen Schwenkarm (8) aufweist, der um eine quer zur Arbeitsrichtung (4) und im Abstand zu der Schwenkachse (5) des Doppelscheibenschares (1) angeordnete und vor dem Doppelscheibenschar (1) liegenden Querachse (9) in vertikaler Richtung schwenkbar gelagert ist und dass zwischen dem Schwenkarm (8) der Tiefenführungsrolle (2) und dem Tragarm (6) des Doppelscheibenschares (1) eine in Druckrichtung nachgebend ausgebildeter Verbindungslenker (10) vorgesehen ist, der getriebetechnisch eine annähernd parallele Führung des Doppelscheibenschares (1) durch die Tiefenführungsrolle (2) gewährleistet.

2. Doppelscheibenschar nach Anspruch 1,
**dadurch gekennzeichnet,**
**dass** der Verbindungslenker (10) bei Auftreffen des Doppelscheibenschares (1) auf ein Hindernis ein weitestgehend unbehindertes Ausweichen des Doppelscheibenschares (1) zulassend ausgebildet ist.

3. Doppelscheibenschar nach Anspruch 1,
**dadurch gekennzeichnet,**
**dass** der Verbindungslenker (10) als Kette, Knicklenker oder Seil (38) ausgebildet ist.

4. Doppelscheibenschar nach Anspruch 1,
**dadurch gekennzeichnet,**
**dass** der Verbindungslenker (10, 38) Dämpfungselemente für die Absorbierung großer Zugkräfte aufweist.

5. Doppelscheibenschar nach Anspruch 1,
**dadurch gekennzeichnet,**
**dass** die Schwenkachse (5) des Tragarms (6) vor dem Doppelscheibenschar (1) liegt, und zwar in einem Abstand zum Boden von mehr als dem halben Durchmesser und weniger als dem ganzen Durchmesser des Doppelscheibenschares (1).

6. Doppelscheibenschar nach Anspruch 1,
**dadurch gekennzeichnet,**
**dass** der Verbindungslenker (10) so ausgebildet ist, dass der obere Verbindungspunkt (11) im Abstand A zu der Querachse (9) zwischen der Querachse (9) und der Achse (13) der Tiefenführungsrolle (2) mit dem Schwenkarm (8) der Tiefenführungsrolle (2) und der untere Verbindungspunkt (12) im Abstand B zu der Schwenkachse (5) zwischen der Schwenkachse (5) und der Achse (14) des Doppelscheibenschares (1) mit dem Tragarm (6) angeordnet ist und dass der Abstand A zum Abstand B annähernd in dem Verhältnis steht wie der Abstand C zwischen der Querachse (9) und der Achse (13) der Tiefenführungsrolle (2) zum Abstand D zwischen der Schwenkachse (5) und der Achse (14) des Doppelscheibenschares (1).

7. Doppelscheibenschar nach mindestens einem der vorhergehenden Ansprüche,
**dadurch gekennzeichnet,**
**dass** die Schwenkachse (5) des Doppelscheibenschares (1) und/oder die Querachse (9) der Tiefenführungsrolle mit einem wartungsfreien Gelenk (19) mit einem Gummilager (21) ausgerüstet ist.

8. Doppelscheibenschar nach mindestens einem der vorhergehenden Ansprüche,
**dadurch gekennzeichnet,**
**dass** sowohl die Schwenkachse (5) des Doppelscheibenschares (1) als auch die Querachse (9) der Tiefenführungsrolle (2) mit wartungsfreien Gelenken (19) mit Gummilagern (21) ausgerüstet sind.

9. Doppelscheibenschar nach mindestens einem der vorhergehenden Ansprüche,
**dadurch gekennzeichnet,**
**dass** das jeweilige Gummilager (21) aus einer Außenhülse (22) mit großem Innendurchmesser und einer Innenhülse (23) mit kleinerem Außendurchmesser als der Innendurchmesser der Außenhülse (22) besteht und dass die beiden Hülsen (22) und (23) mittels Gummi oder Kunststoffmaterial (24) torsionselastisch miteinander verbunden sind.

## Claims

1. Double disc coulter (1) with depth control wheel (2) for seed drills in which the pressure of the double disc coulter (1) on the ground is supported by an energy storage device (3), whereby the double disc coulter (1) swivellable in a vertical direction around a swivelling axle (5) arranged crosswise to the direction of working (4) is connected by means of a support arm (6) with the coulter frame (7) of the seed drill and guided via the depth control wheel (2) in the working depth,
**characterised by the fact that**
the depth control wheel (2) has a swivelling arm (8), swivellable in a vertical direction around a lateral axle (9) arranged crosswise to the direction of working (4) and at a distance from the swivelling axle (5) of the double disc coulter (1) and in front of the double disc coulter (1) and that a torsional joint attachment (10) is provided between the swivel arm (8) of the depth control wheel (2) and the support arm (6) of the double disc coulter (1), which yields in the direction of pressure and which guarantees with regard to gearing parallel guidance of the double disc coulter (1) by the depth control wheel (2).

2. Double disc coulter in accordance with Claim 1,
**characterised by the fact that**
the torsional joint attachment (10) is designed to permit the greatest possible swerving of the double disc coulter (1) when the double disc coulter (1) impinges upon an obstruction.

3. Double disc coulter in accordance with Claim 1,
**characterised by the fact that**
the torsional joint attachment (10) is designed as a chain, as an articulated device or as rope (38).

4. Double disc coulter in accordance with Claim 1,
**characterised by the fact that**
the torsional joint attachment (10, 38) has damping elements for absorbing greater tensile forces.

5. Double disc coulter in accordance with Claim 1,
**characterised by the fact that**
the swivelling axle (5) of the support arm (6) is in front of the double disc coulter (1), namely at a distance to the ground of over half the diameter and less than the complete diameter of the double disc coulter (1).

6. Double disc coulter in accordance with Claim 1,
**characterised by the fact that**
the torsional joint attachment (10) is designed so that the upper connection point (11) is arranged at distance A to the lateral axis (9) between the lateral axis (9) and the axis (13) of the depth control wheel (2) with the swivelling arm (8) of the depth control wheel (2) and the lower connection point (12) is arranged at distance B to the swivelling axis (5) between the swivelling axis (5) and the axis (14) of the double disc coulter (1) with the support arm (6) and clearance A to clearance B is approximately the same ratio as clearance C between the lateral axis (9) and the axis (13) of the depth control wheel (2) to clearance D between the swivelling axis (5) and the axis (14) of the double disc coulter (1).

7. Double disc coulter in accordance with at least one of the above Claims,
**characterised by the fact that**
the swivelling axis (5) of the double disc coulter (1) and/or the lateral axis (9) of the depth control wheel are equipped with a maintenance-free joint (19) with a rubber bearing (21).

8. Double disc coulter in accordance with at least one of the above Claims,
**characterised by the fact that**
that both the swivelling axis (5) of the double disc coulter (1) and the lateral axis (9) of the depth control wheel (2) are equipped with maintenance-free joints (19) with rubber bearings (21).

9. Double disc coulter in accordance with at least one of the above Claims,
**characterised by the fact that**
that the respective rubber bearings (21) consist of an outer sleeve (22) with a large inside diameter and an inner sleeve (23) with an outside diameter that is smaller than the inside diameter of the outer sleeve (22) and the two sleeves (22) and (23) are connected to each other by means of torsionally elastic rubber or plastic material (24).

## Revendications

1. Soc à disque double (1) avec rouleau de guidage en profondeur (2) pour semeuses, dans lequel la pression du soc à disque double (1) sur le sol est soutenue par un réservoir d'énergie (3), sachant que le soc à disque double (1) est relié, autour d'un axe de pivotement (5) disposé transversalement par rapport au sens du travail (4), dans le sens vertical et de façon à pouvoir pivoter au moyen d'un bras porteur (6) avec le cadre du soc (7) de la semeuse, et est mené par l'intermédiaire du rouleau de guidage en profondeur (2) dans la profondeur de travail,
**caractérisé par le fait**
**que** le rouleau de guidage en profondeur (2) présente un bras pivotant (8), qui est suspendu de façon à pouvoir pivoter dans le sens vertical autour d'un axe transversal (9) disposé transversalement par rapport au sens du travail (4) et à une certaine distance de l'axe de pivotement (5) du soc à disque double (1), et se trouvant devant le soc à disque double (1), et qu'un bras de guidage de liaison (10) conçu pour céder dans le sens de la pression est prévu entre le bras pivotant (8) du rouleau de guidage en profondeur (2) et le bras porteur (6) du soc à disque double (1), lequel garantit, en termes de technique d'engrenage, un guidage à peu près parallèle du soc à disque double (1) par le rouleau de guidage en profondeur (2).

2. Soc à disque double selon la revendication 1,
**caractérisé par le fait**
**que** le bras de guidage de liaison (10) est constitué de façon à permettre, au cas où le soc à disque double (1) venait à heurter un obstacle, un déport largement sans difficultés du soc à disque double (1).

3. Soc à disque double selon la revendication 1,
**caractérisé par le fait**
**que** le bras de guidage de liaison (10) prend la forme d'une chaîne, d'une direction articulée ou d'un câble (38).

4. Soc à disque double selon la revendication 1,
**caractérisé par le fait**
**que** le bras de guidage de liaison (10, 38) présente des éléments d'amortissement destinés à absorber des grandes forces de traction.

5. Soc à disque double selon la revendication 1,
**caractérisé par le fait**
**que** l'axe de pivotement (5) du bras porteur (6) se trouve devant le soc à disque double (1), à savoir à une distance du sol supérieure à la moitié du diamètre et inférieure au diamètre complet du soc à disque double (1).

6. Soc à disque double selon la revendication 1,
**caractérisé par le fait**
**que** le bras de guidage de liaison (10) est conçu de manière à ce que le point de liaison supérieur (11) soit disposé à une distance A de l'axe transversal (9) entre l'axe transversal (9) et l'axe (13) du rouleau de guidage en profondeur (2) avec le bras pivotant (8) du rouleau de guidage en profondeur (2), et que le point de liaison inférieur (12) soit disposé à une distance B de l'axe de pivotement (5) entre l'axe de pivotement (5) et l'axe (14) du soc à disque double (1) avec le bras porteur (6), et à ce que la distance A par rapport à la distance B se trouve à peu près dans le même rapport que la distance C entre l'axe transversal (9) et l'axe (13) du rouleau de guidage en profondeur (2) par rapport à la distance D entre l'axe de pivotement (5) et l'axe (14) du soc à disque double (1).

7. Soc à disque double selon au moins une des revendications précédentes,
**caractérisé par le fait**
**que** l'axe de pivotement (5) du soc à disque double (1) et/ou l'axe transversal (9) du rouleau de guidage en profondeur est équipé d'une articulation sans maintenance (19) ayant un palier en caoutchouc (21).

8. Soc à disque double selon au moins une des revendications précédentes,
**caractérisé par le fait**
**qu'**à la fois l'axe de pivotement (5) du soc à disque double (1) et l'axe transversal (9) du rouleau de guidage en profondeur (2) sont équipés d'articulations sans maintenance (19) avec des paliers en caoutchouc (21).

9. Soc à disque double selon au moins une des revendications précédentes,
**caractérisé par le fait**
**que** chacun des paliers en caoutchouc (21) consiste en une enveloppe extérieure (22) ayant un grand diamètre intérieur et une enveloppe intérieure (23) ayant un diamètre extérieure plus petit que le diamètre intérieur de l'enveloppe extérieure (22), et que les deux enveloppes (22) et (23) sont reliées ensemble, avec une élasticité en torsion, au moyen d'un caoutchouc ou d'un matériau en plastique (24).
